# EUROPEAN PATENT APPLICATION

(11) **EP 4 403 783 A1**
(43) Date of publication of application: **24.07.2024**
(21) Application number: 23152968.6
(22) Date of filing: 23.01.2023
(51) Int. Cl.: F16B 19/10, H01R 4/06, F16B 1/00

(54) **A BLIND RIVET FASTENER AND A FASTENING ARRANGEMENT**

(71) Applicant: Newfrey LLC, New Britain, CT 06053 (US)
(72) Inventor: NEUL, Thorsten, 35394 Gießen (DE); LUTZ, Oliver, 35394 Gießen (DE); HOFMANN, Lukas, 35394 Gießen (DE)
(74) Representative: SBD IPAdmin

(57) **Abstract**

The present disclosure relates to a blind rivet fastener (1) for an electrical contact assembly, including a rivet shaft comprising an elongated, hollow sleeve extending coaxially to a longitudinal centre axis of the blind rivet fastener (1) and having an outer sleeve surface and a rivet head (13) extending radially at a first end of the sleeve; wherein the rivet shaft comprises at least one ridge (14) configured to scratch at least one component (103; 104), wherein the at least one ridge (14) projects from the rivet head (13) and extends along a portion of the outer sleeve surface. The disclosure also relates to a fastening arrangement (100') comprising such a blind rivet fastener (1).

## Description

### Technical field

Embodiments of the present disclosure relates blind rivets for an electrical component assembly, such as a blind rivet fastener and a fastening arrangement comprising a blind rivet fastener.

### Technical background

Blind rivets are used to permanently join workpieces or components that are to be in contact with one another. The workpieces or components typically have bores or holes passing through them that are brought into alignment with one another and into which the blind rivet is placed. The workpieces or components are fastened to each other by the blind rivet being deformed when pulling the mandrel arranged in the blind rivet body by a rivet tool.

Blind rivets may be used for electrical contact assemblies. For example, blind rivets may be used to attach round clamps, cable lugs, sheath shaft locks or ground strap to another component or workpiece, such that an electrical contact between the components or workpieces can be established.

However, if the component to which the cable lug or similar is to be attached is painted or lacquered or coated, the paint layer or lacquer layer or coating layer may prevent electrical contact. The paint layer or lacquer layer or coating layer may form an electrical insulation layer.

DE 3612501A discloses a metal blind rivet having ribs on the sleeve. When fastening the rivet by a rivet tool, pulling the mandrel causes the mandrel head to radially expand the sleeve. Thereby, the ribs of the sleeve are driven through any varnish or coating brought into contact with the underlying metal by the radial expansion of the sleeve. A problem with this arrangement is that the expansion of the sleeve may not cause the blind rivet to penetrate the lacquer layer and provide a good electrical connection between the blind rivet and the underlying metal.

### Summary

An object of at least embodiments of the present disclosure is to provide an improvement over the above-described techniques and known art.

According to a first aspect of the disclosure, a blind rivet fastener for an electrical contact assembly is provided. The blind rivet fastener comprises:
a rivet shaft comprising an elongated, hollow sleeve extending coaxially to a longitudinal centre axis of the blind rivet fastener and having an outer sleeve surface, and
a rivet head extending radially at a first end of the sleeve;
wherein the rivet shaft comprises at least one ridge configured to scratch at least one component, wherein the at least one ridge projects from the rivet head and extends along a portion of the outer sleeve surface.

The blind rivet fastener may be a bind rivet including a mandrel arranged in the sleeve, or may be a blind rivet nut.

The at least one ridge may be configured to scratch at least one component by the blind rivet fastener being pushed into the at least one component, for example pushed in a direction substantially parallel to the centre axis.

The at least one ridge may be configured to scratch the at least one component in a direction being substantially parallel to the longitudinal centre axis.

For example, when the blind rivet fastener is set to be attached to at least one component by applying a pulling force on the mandrel arranged in the sleeve by a blind rivet setting tool, the at least one ridge is pushed into the at least one component in direction substantially parallel to the longitudinal centre axis of the blind rivet fastener.

The blind rivet fastener may be configured to be attached to the at least one component. The blind rivet fastener may be configured to join two or more components.

The rivet head and the rivet shaft may be integral. The rivet head and the rivet shaft may be integrally formed.

The at least one ridge may be integral with the rivet shaft. The at least one ridge may be integral with the rivet head.

The at least one ridge may be integrally formed with the rivet head and with the rivet shaft.

The at least one ridge may be configured to establish electrical contact between the blind rivet fastener and the at least one component to which the blind rivet fastener is attached.

The at least one ridge may be continuously extending from the rivet head.

The at least one ridge may be fixedly attached to the rivet head and/or to the outer sleeve surface. More particularly, the at least one ridge may be fixedly attached to the rivet head and to the outer sleeve surface.

The at least one ridge may extend along the portion of the outer sleeve surface in a direction substantially parallel to the longitudinal centre axis.

The at least one ridge may comprise a scratching surface for establishing electrical contact.

The scratching surface may be formed by a tip of the ridge.

The tip may extend in a direction substantially parallel to the longitudinal centre axis.

The scratching surface may be formed by a shoulder surface of the at least one ridge, the shoulder surface being inclined in relation to a plane formed by the radial extension of the rivet head.

The at least ridge may extend from the outer sleeve surface radially, and a radial extension of the at least one ridge may be less than a radial extension of the rivet head.

The at least one ridge may be provided with a shoulder surface substantially parallel to a planar extension of the rivet head, the shoulder surface being configured to rest on the at least one component prior to attaching the blind rivet fastener to the at least one component.

The at least one ridge may comprise two or more ridges, said two or more ridges being arranged around the outer sleeve surface with an equal distance between each other in a circumferential direction of the outer sleeve surface.

The at least one ridge may have a triangular shape as seen in cross-section in a radial extension of the blind rivet fastener.

The blind rivet fastener may further comprise a mandrel arranged in the sleeve of the rivet shaft.

According to a second aspect of the disclosure, a fastening arrangement is provided. The fastening arrangement is configured for joining at least one component with a blind rivet fastener for an electrical contact assembly, the blind rivet fastener being configured to be arranged in a component bore extending through the at least one component,
wherein the blind rivet fastener comprises a rivet shaft comprising an elongated, hollow sleeve extending coaxially to a longitudinal centre axis of the blind rivet fastener and having an outer sleeve surface and a rivet head extending radially at a first end of the sleeve, and
wherein the rivet shaft comprises at least one ridge configured to scratch the at least one component for establishing electrical contact with the at least one component, and wherein the at least one ridge projects from the rivet head and extends along a portion of the outer sleeve surface.

The fastening arrangement may be configured for joining at least a first and a second component, wherein the rivet head is configured to contact the first component, and the at least one ridge is configured to scratch the second component.

The first component may be selected from the group consisting of a ground clamp, a cable lug, a sheath shaft lock, and a ground strap.

The at least one ridge may be configured to scratch through an insulator layer, for instance through paint or lacquer or coating layer provided on the second component and/or on the first component.

The at least one ridge may be configured to scratch the second component by the blind rivet fastener being pushed into the second component and/or the first component, for example, in a direction substantially parallel to the centre axis.

The at least one ridge may be configured to scratch the second component in a direction being substantially parallel to the longitudinal centre axis.

For example, when the blind rivet fastener is fastened to the second component and/or the first component by applying a pulling force on the mandrel arranged in the sleeve of the rivet shaft by a blind rivet setting tool, the at least one ridge is pushed into the second component and/or the first component in direction substantially parallel to the longitudinal centre axis of the blind rivet fastener.

The rivet head and the rivet shaft may be integral. The rivet head and the rivet shaft may be integrally formed.

The at least one ridge may be integral with the rivet shaft. The at least one ridge may be integral with the rivet head.

The at least one ridge may be integrally formed with the rivet head and with the rivet shaft.

The at least one ridge may be configured to establish electrical contact between the blind rivet fastener and the second component and/or the first component to which the blind rivet fastener is attached.

The at least one ridge may be continuously extending from the rivet head.

The at least one ridge may be fixedly attached to the rivet head and to the outer sleeve surface.

The at least one ridge may extend along the portion of the outer sleeve surface in a direction substantially parallel to the longitudinal centre axis.

The at least one ridge may comprise a scratching surface for establishing electrical contact.

The scratching surface may be formed by a tip of the ridge.

The tip may extend in a direction substantially parallel to the longitudinal centre axis.

The scratching surface may be formed by a shoulder surface of the at least one ridge, the shoulder surface being inclined in relation to a plane formed by the radial extension of the rivet head.

The at least ridge may extend from the outer sleeve surface radially, and a radial extension of the at least one ridge may be less than a radial extension of the rivet head.

The at least one ridge may be provided with a shoulder surface substantially parallel to a planar extension of the rivet head, the shoulder surface being configured to rest on the first component and/or the second component prior to attaching the blind rivet fastener to the first component and/or the second component.

The at least one ridge may comprise two or more ridges, said two or more ridges being arranged around the outer sleeve surface with an equal distance between each other in a circumferential direction of the outer sleeve surface.

The at least one ridge may have a triangular shape as seen in cross-section in a radial extension of the blind rivet fastener.

The fastening arrangement may further comprise a mandrel arranged in the sleeve of the rivet shaft.

### Brief description of the drawings

The present disclosure will by way of example be described in more detail with reference to the appended schematic drawings, which show examples of the present disclosure.
Figs. 1a-e show schematically a blind rivet fastener component, for instance a blind rivet body, wherein fig. 1a shows a side view of the blind rivet fastener component, fig. 1b shows a bottom view of the blind rivet fastener component, fig. 1c shows a perspective view of the blind rivet fastener component, fig. 1d shows a cross section of the blind rivet fastener component along line A-A in fig. 1a, and fig. 1e shows a detailed view of a ridge as seen from below
Figs. 2a and 2b show schematically a mandrel, wherein fig. 2a shows a side view of the mandrel, and fig. 2b shows a perspective view.
Fig. 3 shows schematically a blind rivet fastener including a blind rivet body and a mandrel.
Fig. 4 shows schematically an example of a fastening arrangement.
Fig. 5 shows schematically an example of a fastening arrangement.

### Detailed description

A blind rivet fastener 1 for an electrical contact assembly and a fastening arrangement 100, 100' for an electrical contact assembly will now be described with reference to the accompanying drawings.

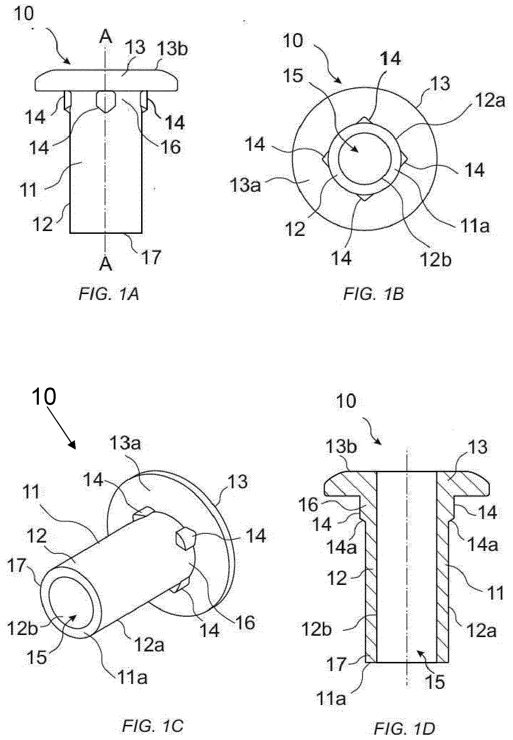

Figs. 1a-e show a blind rivet body 10 of a blind rivet fastener 1. The blind rivet body 10 is for instance adapted to receive a mandrel 21 in a rivet bore 15 thereof to form the blind rivet fastener 1. A centre axis of the rivet bore 15 forms a longitudinal centre axis A-A of the blind rivet fastener 1, as shown in figs. 1a and 1d. However, in an embodiment, the blind rivet fastener may be a blind rivet nut comprising only a blind rivet body 10.

The blind rivet body 10 comprises a rivet shaft 11 and a rivet head 13. The rivet shaft 11 comprises a sleeve 12. The sleeve 12 is hollow, thereby forming the rivet bore 15. The sleeve 12 has an elongated shape, extending in a direction being coaxially to the longitudinal centre axis A-A. The sleeve 12 has an outer surface 12a and an inner surface 12b. The inner surface 12b faces the rivet bore 15. The sleeve 12 may have a substantially circular cross-section in a direction perpendicular to the longitudinal centre axis A-A.

The rivet head 13 is radially extending from a first end 16 of the rivet shaft 11. The rivet bore 15 extends through the rivet head 13. The rivet bore 15 may be an open rivet bore 15 and extend through the rivet head 13 at a centre thereof. The rivet head 13 may have a substantially circular cross-section in a direction perpendicular to the longitudinal centre axis A-A.

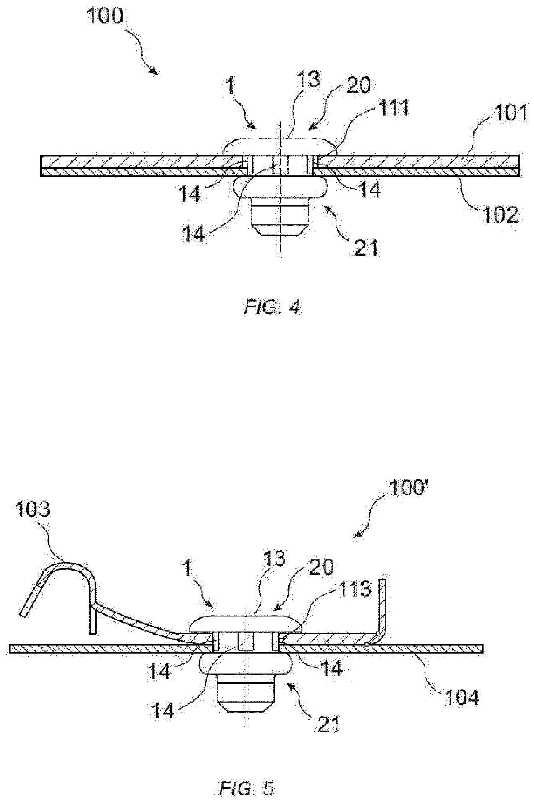

The rivet head 13 has a lower surface 13a configured to face a first component 101 (best shown in Fig. 4) onto which the blind rivet fastener 1 is to be attached to. The lower surface 13a is formed on the underside of the rivet head 13. The lower surface 13a may face a second end 17 of the rivet shaft 11.

The rivet head 13 may have a top surface 13b facing away from the second end 17 of the rivet shaft 11. The top surface13b may have a rounded shape. However, in other embodiments, the top surface may also be flat. The top surface of the rivet head 13 is on an opposite side to the rivet head 13 to the lower contact surface 13a.

The rivet shaft 11 may have a foot surface 11a at the second end 17 of the rivet shaft, opposite the first end 16.

The rivet head 13 may be rotationally symmetric around the longitudinal centre axis A-A. The rivet shaft 11 may be rotationally symmetric around the longitudinal centre axis A-A.

The blind rivet body 10 may be made of steel, stainless steel, aluminium and its alloy, and eventually copper and its alloy. In other examples, the blind rivet body 10 can be formed from any other suitable material which is electrically conductive.

The rivet shaft 11 and the rivet head 13 may be made in one piece, such as being integrally formed.

The rivet shaft 11 comprises at least one ridge 14. In the example shown in figs. 1a-d, the rivet shaft 11 comprises four ridges 14.

The at least one ridge 14 is configured to establish electrical contact between the blind rivet fastener 1 and at least one component to which the blind rivet fastener 1 is attached to. The at least one component is for instance a second component 102 as shown in Fig. 4, to which the blind rivet fastener 1 is attached to. The at least one component may also be a fourth component 104 as shown in Fig. 5, to which the blind rivet fastener 1 is attached to. Thereby, the blind rivet fastener 1 is configured to at least reduce problems associated with components provided with a paint layer and/or a lacquer layer. For example, the second component 102 as shown in Fig. 4 and/or the fourth component 104 as shown in Fig. 5 can be a metal sheet having a paint layer and / or lacquer layer. The at least one ridge 14 is configured to at least scratch a surface of the second component 102 or the fourth component 104 to which the blind rivet fastener 1 is intended to be attached to. The at least one ridge 14 is configured to scratch such a paint layer and/or lacquer layer and/or insulator layer, such that contact is established with the material of the second component 102 or the fourth component 104 located below the paint layer and/or lacquer layer, for example, establishing contact with a metal material of the second component 102 or the fourth component 104.

More particularly the blind rivet fastener 1 as visible in Fig. 4 or Fig. 5, establishes an electrical contact between a first component 101, 103 and the second component 102, 104. The current can flow from the first component 101, 103 to the second component 102, 104 and vice versa through the blind rivet fastener 1. As visible in the embodiment of Fig. 4 or Fig. 5 the lower surface 13a of the rivet head 13 contacts the first component 101, 103. The current can flow from the first component 101, 103 to the blind rivet fastener 1 through this first contact rivet head 13-first component 101, 103. Said first contact rivet head 13-first component 101, 103 is realised by the clamping force applied when setting the blind rivet fastener 1. The second contact realized through the ridge 14 between the blind rivet fastener 1 and the second component 102, 104 enables the current to flow further into the second component 102, 104. This second contact is realized for instance by the penetration of the ridge 14 through any insulator layer of the second component to establish contact with the metal material of the second component. Any paint layer and/or lacquer layer and/or insulator layer may restrict or reduce electrical contact with the underlying material of the second component 102, 104. The electrical contact between the first component 101, 103 and the second component 102, 104 is thus realized by clamping (for the first contact rivet head 13-first component) and the scratching (for the second contact), both being realized when setting the blind rivet fastener 1 (as more detailed later in the description).

In another embodiment (not represented), the blind rivet fastener 1 could be used with only one component 101, 103 and a further element could be electrically connected to the upper surface 13b of the rivet head 13, for example. The at least one ridge 14 may project from the rivet head 13. The at least one ridge 14 may project from the lower surface 13a of the rivet head 13. The at least one ridge 14 may extend continuously from the lower surface 13a of the rivet head 13. The at least one ridge 14 may extend from the lower surface 13a of the rivet head 13 without any gap present between the lower surface 13a and the at least one ridge 14.

The at least one ridge 14 may extend in a radial direction from the outer surface 12a of the sleeve 12. The at least one ridge 14 may also extend along a portion of the outer sleeve surface 12a of the sleeve 12 in a direction substantially parallel to the longitudinal centre axis. The extension of the at least one ridge 14 along the outer sleeve surface 12a may be 0.5 - 5 mm or 0.5-2.5 mm or such as 1.0 - 1.5 mm, for example about 1.2 mm. The at least one ridge 14 may have a free end arranged at a distance from the second end 17 of the rivet shaft 11, as seen in a direction parallel to the longitudinal centre axis.

The at least one ridge 14 may be fixedly attached to the rivet shaft 11. The at least one ridge 14 may be fixedly attached to the rivet head 13.

The at least one ridge 14 may be formed in one piece with the rivet shaft 11, such as being integrally formed with the rivet shaft 11. The at least one ridge 14 may be formed in one piece with the rivet head 13, such as being integrally formed the rivet head 13. The at least one ridge 14 may be formed in one piece with the rivet shaft 11 and the rivet head 13, such as being integrally formed with the rivet shaft 11 and the rivet head 13. In this way the at least one ridge 14 is formed from the same material as the rivet shaft 11. In some examples, the at least one ridge 14 may be hardened with respect to the rivet shaft 11. In this way, the at least one ridge 14 might be better suited to scratch the underlying material of the component. For example, the rivet shaft 11 could be made from steel and the at least one ridge 14 could be hardened heat-treated steel.

The at least one ridge 14 may have various shapes as seen in a cross-sectional direction, perpendicular to the longitudinal centre axis. The cross-section may also be referred to as a radial direction. The at least one ridge 14 may have a triangular cross-sectional shape. The at least one ridge 14 may have a semi-circular cross-sectional shape.

The at least one ridge 14 may be solid.

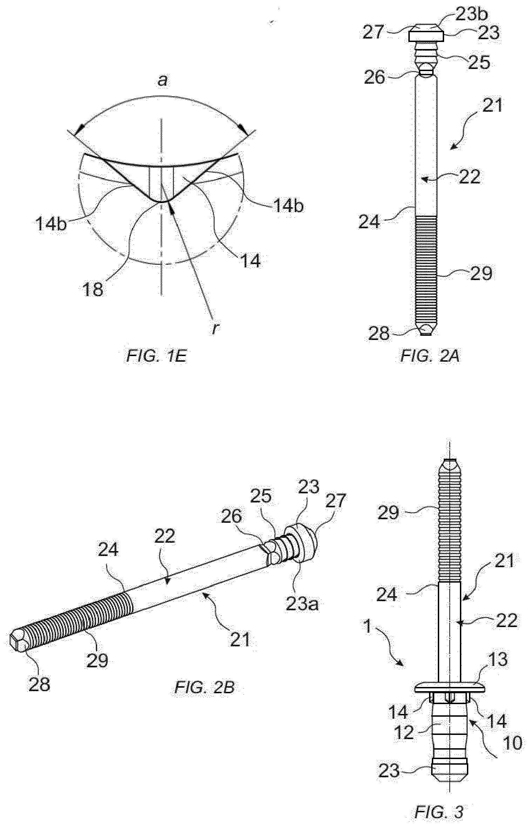

The at least one ridge 14 may have a scratching surface, configured to at least scratch the component, and/or scratch a paint and/or lacquer layer on the second component 102 or on the fourth component 104, to which the blind rivet fastener 1 is intended to be attached. The scratching surface may be formed by a tip 18 of the at least one ridge 14, as shown in fig. 1e. The tip 18 may extend substantially parallel to the longitudinal centre axis. The tip 18 may have a radius *r* of 0.05 - 0.5 mm, such as 0.1 to 0.3 mm, for example about 0.2 mm. In another example, the tip 18 may be inclined in relation to the longitudinal centre axis.

Fig. 1e shows a detailed view of the at least one ridge 14, including the tip 18 forming the scratching surface, as seen from the second end 17 of the rivet shaft 11. As seen in fig. 1e, the at least one ridge 14 is formed by two side surfaces 14b meeting at the tip 18. The side surfaces 14b of the ridge 14 are arranged with an angle a of 20-150°, in particular 60-120°, for example 90-110 °, such as about 100°. As an alternative or complement, the scratching surface may be formed by an inclined, lower surface 14a of the at least one ridge, as shown in fig. 1d. The inclined, lower surface 14a may extend from the outer sleeve surface 12a to an outermost surface or tip of the at least one ridge 14. The inclined, lower surface 14a may be inclined with an angle of 20-90°, in particular 50-70°, such as about 60°, in respect to the outer sleeve surface 12a. Other surfaces of the at least one ridge 14 may also form scratching surfaces, alone or in combination with the tip and/or the inclined surface.

In another example (not shown), a lower surface of the at least one ridge 14 form a shoulder surface, configured to support the blind rivet fastener 1 when position on a surface of the first component 101 or on the third component 103, prior to pushing the blind rivet fastener 1 into a hole of the first component 101 or of the third component 103. The shoulder surface of the at least one ridge 14, configured to form a shoulder surface, may extend in a plane substantially perpendicular to the longitudinal centre axis A-A. The shoulder surface may extend substantially parallel to a planar extension of the rivet head 13.

The at least one ridge 14 may have a substantially uniform extension in the radial direction. The at least one ridge 14 may have a stepped extension in the radial direction. In one example, the at least ridge 14 may have an extension in the radial direction increasing from the outer sleeve surface 12a to the rivet head 13.

In the example shown in figs. 1a-d, the blind rivet fastener 1 comprises four ridges 14. In other examples, the number of ridges 14 may be in the range of 1-10, such as 1-5. The number of ridges 14 may be dependent on the circumference of the rivet shaft 11. In other examples there can be any suitable number of ridges 14 circumferentially spaced around the rivet shaft 11. In a less preferred examples, there is a single ridge 14 or two ridges 14 on the rivet shaft 11. Whilst this example will still provide a suitable electrical contact, this is less preferred because this will be harder for the user to correctly align in the hole in the second component 102. In some examples, there are at least three ridges 14 circumferentially spaced around the rivet shaft 11. In this example, this means that the blind rivet fastener 1 can be positioned level with respect to the second component 102 before fastening.

The ridges 14 may be symmetrically arranged around the circumference of the rivet shaft 11. The ridges 14 may be arranged at equ-angular intervals about the longitudinal centre axis.

Figs. 2a and 2b shows a mandrel 21, which may form part of the blind rivet fastener 1. The mandrel 21 may be arranged on the rivet bore 15 of the blind rivet body 10, which is shown in fig. 3.

The mandrel 21 comprises a mandrel shank 22 that bears a mandrel head 23 at a first end 27, and an elongated drawing head 24 at a second end 28, opposite the first end 27. The mandrel head 23 has a greater diameter than the mandrel shank 22. The mandrel head 23 has, on a surface facing the mandrel shank 22, a flat mandrel contact surface 23a configured to contact the foot surface 11a of the rivet shaft 11. The end 23b of the mandrel head 23 opposite the mandrel contact surface 23a may be in the shape of a truncated cone to facilitate insertion of the blind rivet fastener 1 in a bore in the first and second components 101, 102 or the third and fourth components 103, 104 to which the blind rivet fastener 1 is to be attached.

On part of its length, the mandrel shank 22 has locking means in the form of first end annular ribs 25, which are spaced apart from one another. The first end annular ribs 25 may have a sawtooth-like cross-section composed of conical surfaces and radial surfaces. The conical surfaces of the first end annular ribs 25 may face the mandrel head 23.

The mandrel head 23 is connected to the mandrel shank 22 by means of a constricted parting section 26 configured to form a predetermined breaking point. When the mandrel 21 is arranged in the blind rivet body 10, the parting section 26 is located in the rivet bore 15 of the rivet shaft 11. The parting section 26 is spaced from the rivet head 13 such that the breaking point on the mandrel shank 22 is located in the rivet bore 15 even after setting of the blind rivet fastener 1.

A portion of the drawing head 24 may be provided with second end annular ribs 29 to provide improved attachment to a blind rivet setting tool.

Fig. 4 shows a fastening arrangement 100 for an electrical contact assembly, comprising the blind rivet fastener 1 of type described above attached to at least one component. In fig. 4, the blind rivet fastener 1 is joining first and second components 101, 102. The first and second components 101, 102 may be workpieces or plates as shown in fig. 4. Whilst Fig. 4 shows the first and second components 101, 102 in other examples there can be any number of components e.g. three or more components.

The blind rivet fastener 1 is arranged in a component bore 111 extending through the first component 101 and through the second component 102. The diameter of the component bore 111, at the first component 101 and/or at the second component 102, may be less or more than a diameter of the rivet shaft 11 at the at least one ridge 14. More particularly, the diameter of the component bore 111 at the first component 101 may be more than the diameter of the rivet shaft 11 at the at least one ridge 14. The diameter of the component bore 111 at the second component 102 may be less than the diameter of the rivet shaft 11 at the at least one ridge 14.

The blind rivet fastener 1 is set by pulling the mandrel 21 by a blind rivet setting tool (not shown), thereby joining the first component 101 and the second component 102. In a first step, the rivet shaft 11 is introduced in part in the component bore 111. The diameter of the component bore 111 at the second component 102 being less than the diameter of the rivet shaft 11 at the at least one ridge 14, in the absence of any external force the rivet shaft 11 does not entirely extends in the component bore and the ridge 14 (and more particularly the lower surface 14a of the ridge 14) rests against the first and/or the second component 101, 102 such that the ridge, in the absence of external force, do not extend in the component bore.

When pulling the mandrel 21 by a blind rivet setting tool, the at least one ridge 14 is forced or pushed into at least one of the first component 101 and the second component 102. The at least one ridge 14 is forced or pushed into at least one of the first and the second component 101, 102 in a direction substantially parallel to the longitudinal centre axis of the blind rivet fastener 1. The at least one ridge 14 scratches a surface of the first component 101 and/or of the second component 102. If the first and/or the second component 101, 102 is provided with a paint layer or lacquer layer, the at least one ridge 14 scratches the paint layer or the lacquer layer. The at least one ridge 14 scratches at least one of the first and the second component 101, 102, and/or any layer thereof, in a scratching direction being substantially parallel to the longitudinal centre axis. More particularly, as described above, when setting the blind rivet fastener 1, the at least one ridge 14 penetrates entirely in the component bore 111 and by doing so scratches the second component 102 enabling a contact between the material of the second component 102 and the ridge. Besides, the clamping force applied during the blind rivet fastener setting enables the rivet head 13 to contact the first component 101. Thereby, electrical contact can be established between the blind rivet fastener 1 and at least one of the first and second components 101, 102, and/or between the first component 101 and the second component 102 through the blind rivet fastener 1.

Fig. 5 shows an alternative fastening arrangement 100' for an electrical contact assembly, comprising the blind rivet fastener 1 of type described above attached to at least one component. In fig. 5, the blind rivet fastener 1 is joining third and fourth components 103, 104. The third component 103 may be a ground clamp, a cable lug, a sheath shaft lock, a wave trap or a ground strap. The third component 103 may be configured to be connected to a cable. The rivet head 13 contacts the third component 103. The fourth component 104 may be a plate. The fourth component 104 may be the same and as the first or second component 101, 102 (and more particularly as the second component 102) as previously described.

The blind rivet fastener 1 is arranged in a component bore 113 extending through the third component 103 and through the fourth component 104. The diameter of the bore 113, at the third component 103 and/or at the fourth component 104, may be less or more than a diameter of the rivet shaft 11 at the at least one ridge 14. More particularly, the diameter of the bore 113 at the third component 103 is more than a diameter of the rivet shaft 11 at the at least one ridge 14, and the diameter of the bore 113 at the fourth component 104 is less than a diameter of the rivet shaft 11 at the at least one ridge 14.

The blind rivet fastener 1 is set by pulling the mandrel 21 by a blind rivet setting tool, thereby joining the third component 103 and the fourth component 104.

When pulling the mandrel 21 by a blind rivet setting tool, the at least one rivet 14 is forced or pushed into the fourth component 104. The at least one rivet 14 is forced or pushed into the fourth component 104 in a direction substantially parallel to the longitudinal centre axis of the blind rivet fastener 1. The at least one rivet 14 scratches a surface of the fourth component 104. If the fourth component 104 is provided with a paint layer or lacquer layer, the at least one ridge 14 scratches the paint layer or the lacquer layer thereof. The at least one ridge 14 scratches the fourth component 104, and/or any layer thereof in a scratching direction being substantially parallel to the longitudinal centre axis. More particularly, as described above, when setting the blind rivet fastener 1, the at least one ridge 14 penetrates entirely in the component bore 113 and by doing so scratches the fourth component 104 enabling a contact between the material of the fourth component 104 and the ridge. Besides, the clamping force applied during the blind rivet fastener setting enables the rivet head 13 to contact the third component 103. Thereby, electrical contact can be established between the third component 103, for example a ground clamp, a cable lug, a sheath shaft lock, or a ground strap, and the fourth component 104 by means of the blind rivet fastener 1.

Figs. 4 and 5 respectively show the fastening arrangement when the blind rivet fastener 1 has been set to the first and second components 101, 102; and the third and fourth components 103, 104.

It is contemplated that there are numerous modifications of the embodiments described herein, which are still within the scope of the disclosure as defined by the appended claims.

## Claims

1. A blind rivet fastener (1) for an electrical contact assembly comprising:
a rivet shaft (11) comprising an elongated, hollow sleeve (12) extending coaxially to a longitudinal centre axis of the blind rivet fastener (1) and having an outer sleeve surface (12a) and
a rivet head (13) extending radially at a first end of the sleeve (12);
wherein the rivet shaft (11) comprises at least one ridge (14) configured to scratch at least one component (101, 102; 103, 104), wherein the at least one ridge (14) projects from the rivet head (13) and extends along a portion of the outer sleeve surface (12a).

2. The blind rivet fastener according to claim 1, wherein the at least one ridge (14) is configured to establish electrical contact between the blind rivet fastener (1) and at least one component to which the blind rivet fastener (1) is attached.

3. The blind rivet fastener according to claim 1 or 2, wherein the at least one ridge (14) is continuously extending from the rivet head (13).

4. The blind rivet fastener according to claim 1 or 2, wherein the at least one ridge (14) is fixedly attached to the rivet head (13) and to the outer sleeve surface (12a).

5. The blind rivet fastener according to any one of the preceding claims, wherein the at least one ridge (14) is extending along the portion of the outer sleeve surface (12a) in a direction substantially parallel to the longitudinal centre axis.

6. The blind rivet fastener according to any one of the preceding claims, wherein the at least one ridge (14) comprises a scratching surface for establishing electrical contact.

7. The blind rivet fastener according to claim 6, wherein the scratching surface is formed by a tip of the ridge (14).

8. The blind rivet fastener according to claim 6, wherein the scratching surface is formed by a shoulder surface (14a) of the at least one ridge (14), the shoulder surface (14a) being inclined in relation to a plane formed by the radial extension of the rivet head (13).

9. The blind rivet fastener according to any one of the preceding claims, wherein the at least ridge (14) extends from the outer sleeve surface (12a) radially, and a radial extension of the at least one ridge (14) is less than a radial extension of the rivet head (13).

10. The blind rivet fastener according to any one of the preceding claims, wherein the at least one ridge (14) is provided with a shoulder surface substantially parallel to a planar extension of the rivet head, the shoulder surface being configured to rest on a component prior to attaching the blind rivet fastener (1) to the component.

11. The blind rivet fastener according to any one of the preceding claims, wherein the at least one ridge comprises two or more ridges (14), said two or more ridges (14) being arranged around the outer sleeve surface (12a), in particular with an equal distance between each other in a circumferential direction of the outer sleeve surface (12a).

12. The blind rivet fastener according to any one of the preceding claims, wherein the at least one ridge (14) has a triangular shape as seen in cross-section in a radial extension of the blind rivet fastener (1).

13. A fastening arrangement (100; 100') for joining at least one component (102; 104) with a blind rivet fastener (1) for an electrical contact assembly, the blind rivet fastener (1) being configured to be arranged in a component bore (111; 113) extending through the at least one component (102;104), wherein the blind rivet fastener (1) comprises a rivet shaft (11) comprising an elongated, hollow sleeve (12) extending coaxially to a longitudinal centre axis of the blind rivet fastener (1) and having an outer sleeve surface (12a) and a rivet head (13) extending radially at a first end of the sleeve, and
wherein the rivet shaft (11) comprises at least one ridge (14) configured to scratch the at least one component (102; 104) for establishing electrical contact with said at least one component (102, 104), and wherein the at least one ridge (14) projects from the rivet head (13) and extends along a portion of the outer sleeve surface (12a).

14. The fastening arrangement according to claim 13, wherein at least a first and a second component (101, 102, 103, 104) are provided, wherein the rivet head 13 is configured to contact the first component (101, 103), and the at least one ridge is configured to scratch the second component (102, 104).

15. The fastening arrangement according to claim 14, wherein the at least one ridge (14) is configured to scratch through an insulator layer the edge of the component bore (111, 113) of the second component (102, 104).
